# EUROPEAN PATENT APPLICATION

(11) **EP 4 636 672 A1**
(43) Date of publication of application: **22.10.2025**
(21) Application number: 24171048.2
(22) Date of filing: 18.04.2024
(51) Int. Cl.: G06Q 20/22, H04L 67/104, G06Q 20/10, G06F 21/60

(54) **OPEN LOOP TRANSACTION SYSTEM AND METHOD**

(71) Applicant: Mastercard International Incorporated, Purchase, NY 10577 (US)
(72) Inventor: BUSSOLOTTI, Luca, Rome (IT); SLOUKA, Ludek, Prague (CZ); GUNKEL, Martin, Frankfurt (DE); THOROVSKY, Stanislav, Prague (CZ); MEDDINA, Davide, Rome (IT)
(74) Representative: Murgitroyd & Company

(57) **Abstract**

A system and method of effecting an open-loop, peer to peer transaction between two users of respective payment systems, which may be same or different payment systems. A user device associated with a sender, sends a payment request comprising user identifier data associated with a receiver, wherein the user identifier data comprises data other than payment account identifier data to a secure remote commerce server. The secure remote commerce server maps the user identifier data to account identifier data associated with a receiver account. A processor sends the payment request comprising the account identifier data, to a sender server associated with a sender payment provider associated with sender. Fund transfer from the sender payment provider to the receiver account identified by the account identifier data at a second financial institution is carried out.

## Description

### Field Of The Disclosure

The present disclosure relates to an open loop transaction system and method. More particularly, but not exclusively it relates to a peer-to-peer open loop transaction system and method. Even more particularly, but not exclusively, it relates to an a peer-to-peer open loop transaction system method enabled via a non-financial user identifier.

### Background

Peer-to-peer transactions, where a sender transfers money directly from their account to a receivers account are booming.

There are many payment systems enabled for peer-to-peer payment such as Revolut, Paypal etc., and many of these systems use non-financial user identifiers, such as for example an email address or a telephone number to identify recipients and/or senders. However, these systems are closed loop, meaning that it is necessary for both the sender and recipient to have access to a specific app or website associated with the payments systems, and as such are not global or scalable particularly where access to smartphones and technology is limited.

Furthermore, all current money transfer platforms are either not based on cards or users might not be willing to share their payment credentials as required by current peer-to-peer payment systems.

Current peer-to-peer payment systems have complicated and laborious know-your-customer (KYC) requirements which restrict adoption, particularly where access to banking facilities or valid identity documents is difficult.

Additionally, in tokenised peer-to-peer payment systems, there can be security concerns around such transactions where a token is stolen, and the payment is diverted to a fraudster account.

Existing peer-to-peer payment systems are not built using existing infrastructure and therefore either operate outside existing infrastructure or require the adaptation of such infrastructure to integrate with it to operate successfully.

Currently, there is no open loop transaction system that is agnostic to the brand or type of payment device used and that is secure against interception of payment tokens.

### SUMMARY OF THE DISCLOSURE

According to a first aspect of the present disclosure there is provided a computer implemented method of effecting a transaction between two users of a payment system comprising the steps of:
receiving at a processor, from a user device associated with a sender, a payment request comprising user identifier data associated with a receiver, wherein the user identifier data comprises data other than payment account identifier data;
mapping, at the processor, the user identifier data to account identifier data associated with a receiver account;
forwarding, by the processor, the payment request, comprising the account identifier data, to a sender server associated with a sender payment account provider associated with sender; and
transferring funds from the sender payment account provider to the receiver account identified by the account identifier data..

The method may comprise sending the payment request from the user device using a software application associated with the sender payment provider or a third party software application having the sender payment credentials stored therein, running on the user device via the sender server.

The receiver account identified by the account identifier may be at a receiver payment account provider which is different from the sender payment account provider.

The method may comprise executing the payment transaction between the sender payment provider and receiver account using money transfer card payment type.

The method may comprise setting a flag in the money transfer card payment type to receive only. The realisation that a receive only token can be used to enable secure open loop peer-to-peer payments provides a new use for open loop payment technology.

The method may comprise interfacing between the processor and the sender server via a secure commerce interface. The method may comprise instigating from a payment device issuer agnostic application. The method may comprise accessing, by the processor, a database comprising user identifier data to account identifier data mapping relationships for a plurality of receiver accounts.

Providing an issuer and payment system agnostic peer-to-peer payment method and system that provides a scalable, globally applicable peer-to payment system. The method may comprise determining, by the processor, if a mapping of the user identifier data to account identifier data associated with the receiver account is possible, and if not to send a request to the user identified by the user identifier data to provide data required to complete the transaction. The request may comprise a request for unencrypted payment data, by way of non-limiting example a primary account number (PAN).

Providing a prompt to an unmapped receiver to register in order to receive payment increases the efficiency of the system by providing more completed transactions that would be the case if the transaction were just rejected in such a case.

According to second aspect of the present disclosure there is provided a peer-to-peer payment system comprising:
a user device arranged to initiate a peer-to-peer payment
a processor arranged to receive from the user device associated with a sender, a payment request comprising user identifier data associated with a receiver, wherein the user identifier data comprises data other than payment account identifier data;
the processor being further arranged to map the user identifier data to account identifier data associated with a receiver account;
the processor being arranged to forward the payment request, comprising the account identifier data, to a sender server associated with a sender payment provider associated with sender; and
a payment network being arranged to transfer funds from the sender payment provider to the receiver account identified by the account identifier.

The account identified by the account identifier may be at a receiver payment account provider which is different from the sender payment account provider.

The processor may be arranged to access a database comprising user identifier data to account identifier data mapping relationships for a plurality of receiver accounts.

The payment transaction between the sender and receiver institutions may be executed using the money transfer transaction. A money transfer transaction flag may be set to receive only.

The system may comprise a secure commerce initiator is provided between the processor and the sender server via a secure commerce interface.

The processor may be arranged to determine if a mapping of the user identifier data to account identifier data associated with the receiver account is possible, and if not to send ant request to the user identified by the user identifier data to provide data required to complete the transaction.

A non-transitory computer readable medium having stored thereupon instructions which when executed on a processor cause the processor to execute the method according to the first aspect of the present disclosure, or to act as the processor of the second aspect of the present disclosure.

### BRIEF DESCRIPTION OF THE DRAWINGS

The disclosure will now be described, by way of example only, with reference to the accompanying drawings, in which:
Figure 1 is a schematic representation of an embodiment of a peer-to-peer payment system in accordance with the present disclosure;
Figure 2 is a further schematic representation of the embodiment of the peer-to-peer payment system of Figure 1;
Figure 3 is a process diagram of a method of peer-to -peer payment method executed on the payment system of Figures 1 and 2;
Figure 4 is a schematic representation of a further embodiment of a peer-to-peer payment system in accordance with the present disclosure; and

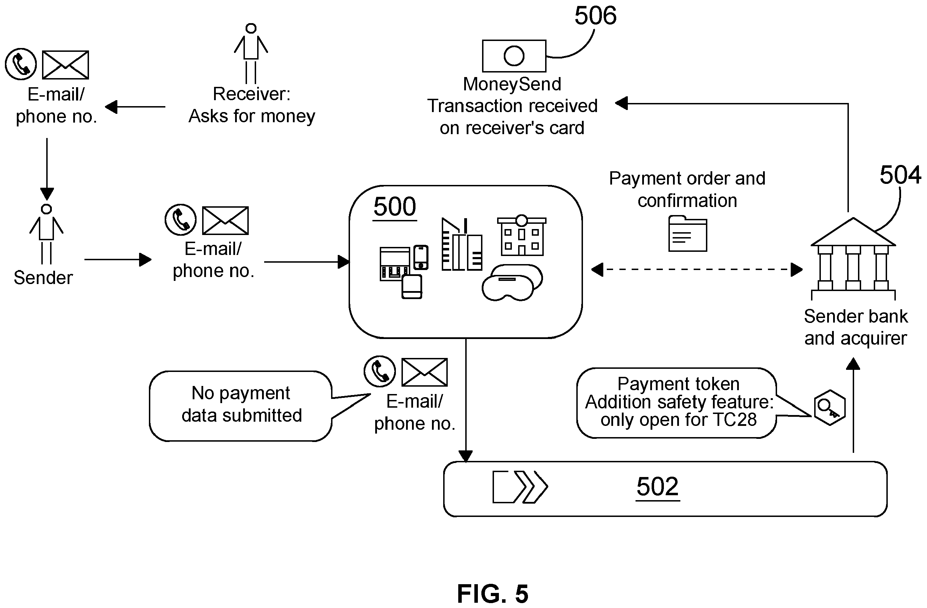

Figure 5 is is a schematic representation of a yet further embodiment of a peer-to-peer payment system in accordance with the present disclosure.

### DESCRIPTION OF EMBODIMENTS

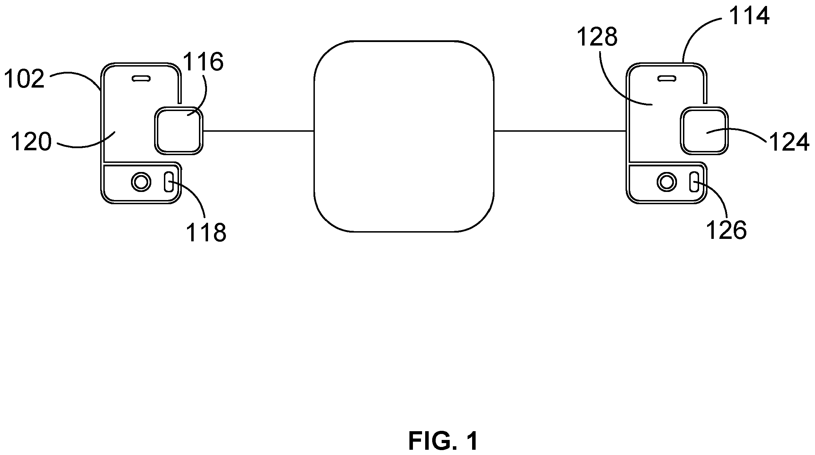

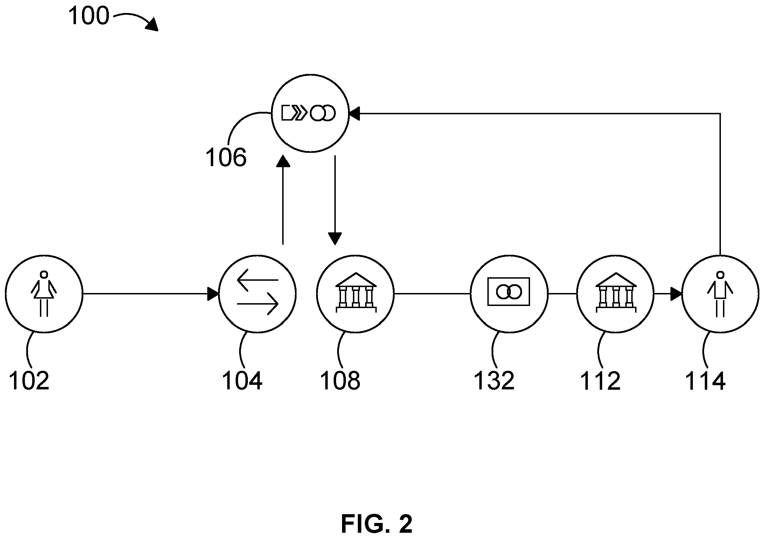

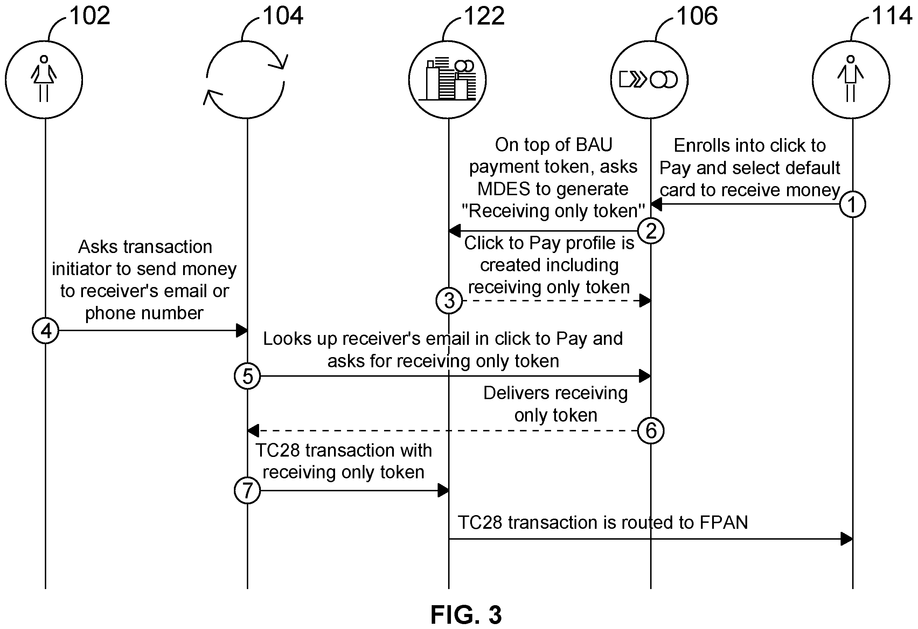

Referring now to Figures 1, 2 and 3, an open loop peer-to-peer payment system 100 comprises a sender user device 102, a transaction initiator processor 104, a remote secure commerce server 106, an originating (sender) financial institution 108, a payment network 110, a receiving (receiver) financial institution 112 and a receiver user device 114.

Typically, the sender user device 102 comprises a data storage device 116, a processor 118 and a touch screen 120. It will be appreciated that a payment device, such as a payment card can be embodied as a virtual, soft, card stored in cloud storage of a wallet server

In the present disclosure, the file is stored on a data storage device 121 of the remote secure commerce server 106 and is typically in the form of an encrypted token, which replaces the primary account number (PAN) when executing a transaction, by way of non-limiting example of the form generated by the Mastercard Digital Enablement Service (MDES) 122, a payment token service provider. MDES digitizes consumer's account PANs, replacing them with tokens that can be used for digital payment transactions. These tokens can have flags associated with them that set parameters for how they can be used. It will be appreciated that MDES 122 is only an exemplar of token providing services and any other suitable proprietary token provider can be used.

The sender requests a token from MDES 122 corresponding to a payment device via the sender device 102. MDES 122 generates a token and forwards it to the remote commerce server 106, where it is stored on the storage device 121. For the avoidance of doubt, Tokenization is a process of replacing sensitive data with non-sensitive data. In the payments industry, it is used to safeguard a card's PAN by replacing it with a unique string of characters which can be mapped to the PAN. In most instances the token will be further protected via encryption.

The sender may enrol for the peer-to-peer transaction system via a number of routes, by way on non-limiting example, by their issuer's banking application wherein the issuer receives a request from the sender to enrol which either contains non-financial information such as, by way of non-limiting examples, any or all of the sender's email, telephone number, name and billing address along with the primary account number (PAN) of a respective payment device or which directs the issuer to pull this information from a database which they hold. The issuer then sends a request for push provisioning of the token to MDES 122 via a token requestor, for example the Mastercard Secure Commerce token requestor. In an alternative embodiment, the sender can enrol via a registration portal where they enter their details, such as, by way of non-limiting examples, any or all of the sender's email, telephone number, name and billing address along with the primary account number (PAN) of a respective payment device. The registration portal then sends the request to the token requestor. In a yet further alternative the sender can register at an ecommerce checkout for example, at merchant online store or in a merchant app. In this case the sender is directed to enrol via a secure remote commerce interface to upload their details, such as, by way of non-limiting examples, any or all of the sender's email, telephone number, name and billing address along with the primary account number (PAN) of a respective payment device.

The receiver user device 114 comprises a data storage device 124, a processor 126 and a touch screen 128. The receiver can register and receive a token in the same or a similar manner to that described hereinbefore with reference to the sender.

Each receiver user device has a default payment device, typically a payment card that is set to receive payments to an account associated with the payment device. In some embodiments, the token will have a flag that indicates that it can be used with TC28 transactions, by way of non-limiting example for receiving payments only. Once TC28 transactions is processed, the MDES service.

It will be appreciated that, by way of non-limiting example, a physical payment device in the form a card, typically a chip and PIN card, need not be employed a card can be embodied as a virtual, soft, card embodied as a file on a mobile device such as a mobile telephone can be used.

In an exemplary embodiment, the sender is enrolled in the peer-to-peer transaction initiator 104 that is operatively connected to the remote commerce server 106 when in use for peer-to-peer payments. In a preferred embodiment, the peer-to-peer transaction initiator 104 is agnostic to either or both of payment card scheme (e.g. Mastercard or Visa) and/or card issuer. Examples of a the peer-to-peer transaction initiator 104 include, but are not limited to, a money transfer application which is running on the sender user device 102 and usually, but not necessarily on the receiver user device 114, or functionality within a broader financial application, for example a smart banking app, running on at least the sender user device 102. Non-limiting examples of transaction initiator applications include Venmo, PayPal, Revolut, Western Union. It will be appreciated that the money transfer application may be, branded, white labelled or generic, but is typically brand agnostic with respect to the card issuer and/or the payment network used to process transaction. In at least one embodiment, the transaction initiator 104 pushes a transaction to a registered e-mail address and a payments card industry, PCI, compliant acquirer exchanges the e-mail address for a "receive transaction only" token, reversing the mapping, such that the money arrives at the account associated with the card of the receiver.

In use, the sender enters the receiver's identification data, as minimum an email address or a telephone number or an alias or nickname, at the transaction initiator application running on the sender user device 102 and confirms the amount of money to be sent to the receiver. The sender then confirms that the details are correct and the transaction initiator 104 and forwards the identification data to the remote commerce server 106 where the identification data is used to look up the receiver's details from a database or table of enrolled users' identification details. Along with, or separately from, the identification data the transaction initiator 104 messaging comprises a request for the receivers tokenised account details, for example the transaction initiator receives only payment token such that even if the token is stolen it can only be used for payment transactions to the receivers account and it cannot be used to send or extract payments from the receiver's account. In one non-limiting example, the sender initiates a transaction via the transaction initiator 104 and, in some examples, pays the transaction initiator for a transfer of funds. The transaction initiator 104 only receives data identifying the receiver, for example the receiver's email or telephone number. The originating institution 108 does not need to have a relationship with the sender. However, it may be that the sender is an account holder at the originating institution 108. For example it may simply be a financial institution that is connected to, by way of non-limiting example, Mastercard Click to Pay and MDES (payment token service provider) such that it can translate and replace a payment token for the original funding PAN (FPAN = primary account number) so that an issuer of the FPAN knows where to transfer funds to in a transaction . By way of non-limiting example, a sender asks Western Union^{™} to send money to someone. WU has a financial institution that pushes the transaction, corresponding to the originating institution 108). The sender does not need to have relationship, or an account, with Western Union's^{™} originating institution.

If the receiver is not found in the remote commerce server 106 database the receiver can be prompted to enrol in the peer-to-peer transaction system as detailed above, by means, by way of non-limited example the identification data provided by the sender, such as sending an email message to an email address in the identification data and/or by a push notification/ text message to enrol a telephone number provided in the identification data.

The originating financial institution 108 then makes payment to the receiver's financial institution 112 via a payment network 132. In the present disclosure the exemplary payment network 132 is considered to be entered via the Mastercard Send platform, this is a non-limiting example and its operation is discussed as a non-limiting exemplar only.

The Mastercard Send platform an interface for the Originating institution into the Mastercard (in general - scheme) processing network to realize a transaction, resulting in near-instantaneous transaction completion. In the Mastercard processing network, the sender's financial institution 108 obtains the recipient's card number and initiates the transaction. The sender temporarily places the funds in their bank's settlement account. The Mastercard scheme network accessed via 132 Mastecard Send routes the transaction details to the correct Receiving Instituation 112 and the funds are deposited into the receiver's account identified by FPAN.

A notification of the transfer of funds from the sender's financial institution 108 to the receiver's financial institution 112 is displayed on the touch screen 128 of the receiver's user device 114.

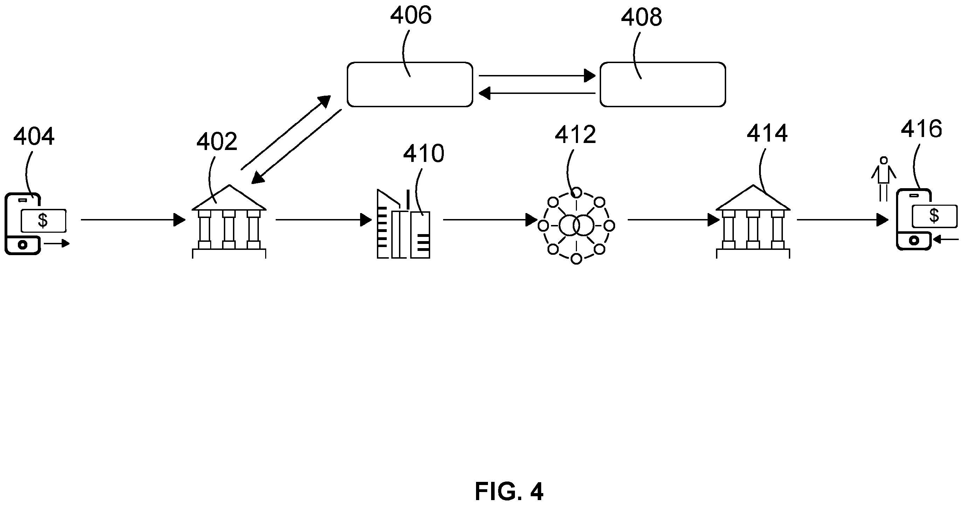

In an alternative embodiment, discussed herein with reference to Figure 4, a request to send money comprising non-financial identification data is sent to the sender's financial institution 402 from an application on the sender user device 404, for example the smart banking application enabled for to card money transfer transactions. The non-financial identification data comprises, by way of non-limiting example, email address or telephone number. The sender's financial institution 402 requests the receiver's payment credentials corresponding to the identification data via a secure remote commerce API 406 to a secure remote commerce server of an identified card scheme 408. The secure remote commerce server 408 interrogates its database mapping non-financial identification data to payment tokens / FPANs and, if there is a correspondence between the non-financial identification data and a payement token / FPAN returns the payment token or FPAN to the sender's financial institution 402. If payment card does not support tokenization, FPAN will be returned. It will be appreciated that in at least one token or FPAN may have a "receive only" flag associated with it, as detailed hereinbefore.

The sender's financial institution 402 prepares a funding transaction data package comprising, at least, the token or payment credential and the transaction amount. The transaction data package can also optionally include other information such as, but not limited to, the receiver's name and billing address in addition to the payment credentials and amount. This transaction data package is routed over network infrastructure to a payment acquirer 410. The acquirer 410 passes the transaction data package is passed over a payment network 412 using known money transfer transaction type and messaging to the receiver's financial institution 414 where the receiver's account is credited with the transaction amount. The receiver's mobile device 416 displays a message confirming receipt of the transaction amount on a screen 418.

In a further embodiment, a receiver requests payment from a sender, typically via an email, a notification to a phone number, such as an SMS message, or via a push message in a transaction application 500. The payment request may comprise an email address or a telephone number or an alias or nickname associated with the receiver which can be used as sender identification data. The sender provides the identification data to the transaction application 500. The transaction application routes the identification data to a remote secure commerce server 502, which interrogates its database mapping non-financial identification data to payment token / FPAN. If there is a correspondence between the non-financial identification data and a payment token or a FPAN the remote commerce server 502 returns these inputs to the sender's financial institution 504. As noted hereinbefore if a token is returned, there may be applied an additional security by limiting the token for receiving funds only. This limitation is based on capability of the payment scheme to set such rule in scheme network and or side of the receiving institution. ,

The transaction application 500 has sent a payment order detailing the amount and to the sender's financial institution.

The token is used to effect a transaction via a transaction network 506 to an account directly linked to the receiver's card.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

**1.** A computer implemented method of effecting a peer-to-peer transaction between two users of a transaction system comprising the steps of:
receiving at a processor, from a user device associated with a sender, a payment request comprising user identifier data associated with a receiver, wherein the user identifier data comprises data other than payment account identifier data;
mapping, at the processor, the user identifier data to account identifier data associated with a receiver account;
forwarding, by the processor, the payment request, comprising the account identifier data, to a sender server associated with a sender payment account provider associated with sender; and
transferring funds from the sender payment account provider to the receiver account identified by the account identifier data.

**2.** The method of Claim 1 comprising sending the payment request from the user device using a software application associated with the sender payment provider or a third party software application having the sender payment credentials stored therein, running on the user device via the sender server.

**3.** The method of either Claim 1 or Claim 2 comprising executing the payment transaction between the sender payment account provider and the receiver account using a money transfer card payment type.

**4.** The method of Claim 3 comprising setting a flag in the money transfer card payment type to receive only.

**5.** The method of any preceding claim comprising interfacing between the processor and the sender server via a secure commerce interface.

**6.** The method of any preceding claim comprising instigating from a payment device issuer agnostic application.

**7.** The method of any preceding claim comprising accessing by the processor a database comprising user identifier data to account identifier data mapping relationships for a plurality of receiver accounts.

**9.** The method of any preceding claim comprising determining, by the processor, if a mapping of the user identifier data to account identifier data associated with the receiver account is possible, and if not to send a request to the user identified by the user identifier data to provide data required to complete the transaction.

**10.** A peer-to-peer payment system comprising:
a user device arranged to initiate a peer-to-peer payment
a processor arranged to receive from the user device associated with a sender, a payment request comprising user identifier data associated with a receiver, wherein the user identifier data comprises data other than payment account identifier data;
the processor being further arranged to map the user identifier data to account identifier data associated with a receiver account;
the processor being arranged to forward the payment request, comprising the account identifier data, to a sender server associated with a sender payment provider associated with sender; and
a payment network being arranged to transfer funds from the sender payment provider to the account identified by the account identifier data..

**11.** The system of Claim 10 wherein, the processor is arranged to access a database comprising user identifier data to account identifier data mapping relationships for a plurality of receiver accounts.

**12.** The system of either Claim 10 or Claim 11 wherein, the payment transaction between the sender payment provider and the receiver account is executed using a money transfer card payment type comprising setting a flag to receive only.

**13.** The system of any one of Claims 10 to 12 comprising a secure commerce interface is provided between the processor and the sender server via a secure commerce interface.

**14.** The system of any one of Claims 10 to 13 wherein, the processor is arranged to determine if a mapping of the user identifier data to account identifier data associated with the receiver account is possible, and if not to send a request to the user identified by the user identifier data to provide data required to complete the transaction.

**15.** A tangible computer readable medium having stored thereupon instructions which when executed on a processor cause the processor to execute the method of any one of Claims 1 to 10, or to act as the processor of any one of Claims 11 to 14.
